# EUROPEAN PATENT SPECIFICATION

(11) **EP 3 220 615 B1**
(45) Date of publication and mention of the grant of the patent: **08.04.2020**
(21) Application number: 15876646.9
(22) Date of filing: 30.10.2015
(51) Int. Cl.: H04M 1/725, G09G 5/10, H04M 1/22, H05B 33/08, H05B 37/02, G09G 3/34

(54) **METHOD AND DEVICE FOR SETTING BRIGHTNESS OF SCREEN**
VERFAHREN UND VORRICHTUNG ZUR EINSTELLUNG DER HELLIGKEIT EINES BILDSCHIRMS
PROCÉDÉ ET DISPOSITIF DE RÉGLAGE DE LUMINOSITÉ D'ÉCRAN

(30) Priority: 08.01.2015 CN 201510010144; 11.02.2015 CN 201510072593
(43) Date of publication of application: 20.09.2017
(73) Proprietor: Xiaomi Inc., Beijing 100085 (CN)
(72) Inventor: LI, Guosheng, Beijing 100085 (CN); LIU, Anyu, Beijing 100085 (CN); LIU, Shanrong, Beijing 100085 (CN)
(74) Representative: Cabinet Beau de Loménie
(86) International application number: PCT/CN2015/093408
(87) International publication number: WO 2016/110145

(56) References cited:
- CN-A- 103 137 099
- CN-A- 103 327 148
- CN-A- 103 327 148
- CN-A- 103 971 648
- CN-A- 104 023 145
- CN-A- 104 700 816
- JP-A- 2010 034 914
- JP-A- 2013 195 726
- US-A1- 2009 262 052
- US-A1- 2012 182 278

## Description

This application is based on and claims a priority to Chinese Patent Application No. 201510072593.7, filed on February 11, 2015, and Chinese Patent Application No. 201510010144.X, filed on January 8, 2015.

### TECHNICAL FIELD

The present disclosure generally relates to the field of computer technology, and more particularly, to a method for setting a brightness of a screen and an apparatus for setting a brightness of a screen.

### BACKGROUND

Automatic backlight adjustment is that a backlight brightness of a screen of a terminal is adjusted automatically according to a brightness of ambient light to enable the backlight brightness of the screen to be in positive correlation with the ambient light. The automatic backlight adjustment may ensure that the backlight brightness of the screen is adapted to the ambient light so as to protect the eyesight of the user.

Generally, a light sensor is mounted at an opening of a front surface of the terminal. When the ambient light generated by a light source enters the light sensor through the opening, the terminal may measure the brightness of the ambient light via the light sensor, calculate the backlight brightness level according the brightness of the ambient light and a backlight function which is used when the light sensor faces the light source, and set the backlight brightness to the calculated backlight brightness level. CN 103 327 148 A, JP 2010 034914 A and US 2009/262052 A1 disclose examples of mobile terminals featuring automatic backlight adjustment.

### SUMMARY

In order to solve a problem that when the light sensor faces away from the light source, the measured brightness of the ambient light is lower, and that an inaccurate backlight brightness level is calculated according to the measured brightness of the ambient light and a backlight function which is used when the light sensor faces the light source, the present disclosure provides a method and an apparatus for setting a brightness of a screen.

According to a first aspect of embodiments of the present disclosure, there is provided a method for setting a brightness of a screen of a terminal according to claim 1.

According to a second aspect of embodiments of the present disclosure, there is provided an apparatus for setting a brightness of a screen of a terminal according to claim 5.

The technical solutions provided in embodiments of the present disclosure may have the following advantageous effect.

The brightness of the ambient light in the environment where the terminal is located is acquired by the light sensor, it is detected whether the light sensor faces away from the light source in the environment; the first backlight brightness level is calculated according to the brightness of the ambient light if it is detected that the light sensor faces away from the light source, in which the first backlight brightness level is higher than the second backlight brightness level which is calculated according to the brightness of the ambient light when the light sensor faces the light source; and then the backlight brightness of the terminal is set to the first backlight brightness level. Since the brightness acquired by the light sensor is lower than the actual brightness of the ambient light when the light sensor faces away from the light source, the first backlight brightness level calculated when the light sensor faces away from the light source is higher than the second backlight brightness level calculated when the light sensor faces the light source. The problem that an inaccurate backlight brightness level is calculated according to the measured brightness of the ambient light and the backlight function which is used when the light sensor faces away from the light source because the measured brightness of the ambient light is lower when the light sensor faces away from the light source is solved, and an effect of improving the accuracy of the backlight brightness level is achieved.

It is to be understood that both the foregoing general description and the following detailed description are merely exemplary and explanatory, and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for setting a brightness of a screen according to an example embodiment of the present disclosure;
Fig. 2A is a flow chart showing a method for setting a brightness of a screen according to another example embodiment of the present disclosure;
Fig. 2B is a schematic diagram illustrating a backlight function according to an example embodiment of the present disclosure;
Fig. 2C is a schematic diagram illustrating a comparison of backlight functions according to an example embodiment of the present disclosure;
Fig. 3 is a block diagram showing an apparatus for setting a brightness of a screen according to an example embodiment of the present disclosure;
Fig. 4 is a block diagram showing an apparatus for setting a brightness of a screen according to an example embodiment of the present disclosure; and
Fig. 5 is a block diagram showing a device for setting a brightness of a screen according to an example embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the invention as recited in the appended claims.

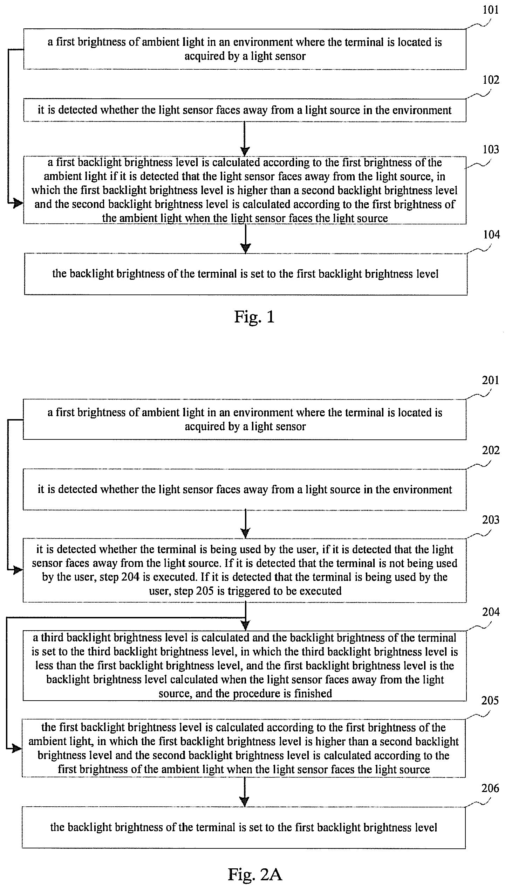

Fig. 1 is a flow chart showing a method for setting a brightness of a screen according to an example embodiment of the present disclosure. The method for setting a brightness of a screen is implemented by a terminal. As shown in Fig. 1, the method for setting a brightness of a screen includes following steps.

In step 101, a first brightness of ambient light in an environment where the terminal is located is acquired from a light sensor.

In step 102, it is detected whether the light sensor faces away from a light source in the environment.

In step 103, a first backlight brightness level is calculated according to the first brightness of the ambient light if it is detected that the light sensor faces away from the light source, wherein the first backlight brightness level is higher than a second backlight brightness level, and the second backlight brightness level is calculated according to the first brightness of the ambient light when the light sensor faces the light source.

In step 104, the backlight brightness of the terminal is set to the first backlight brightness level.

In summary, with the method for setting a brightness of a screen provided by the present disclosure, the brightness of the ambient light in the environment where the terminal is located is acquired by the light sensor, and it is detected whether the light sensor faces away from the light source in the environment, and the first backlight brightness level is calculated according to the brightness of the ambient light if it is detected that the light sensor faces away from the light source, in which the first backlight brightness level is higher than the second backlight brightness level which is calculated according to the brightness of the ambient light when the light sensor faces the light source, and then the backlight brightness of the terminal is set to the first backlight brightness level. Since the brightness acquired by the light sensor is lower than an actual brightness of the ambient light when the light sensor faces away from the light source, the first backlight brightness level calculated when the light sensor faces away from the light source is higher than the second backlight brightness level calculated when the light sensor faces the light source. The problem that an inaccurate backlight brightness level is calculated according to the measured brightness of the ambient light and the backlight function which is used when the light sensor faces away from the light source because the measured brightness of the ambient light is lower when the light sensor faces away from the light source is solved, and an effect of improving the accuracy of the backlight brightness level is achieved.

Fig. 2A is a flow chart showing a method for setting a brightness of a screen according to another example embodiment of the present disclosure. The method for setting a brightness of a screen is implemented by a terminal. As shown in Fig. 2A, the method for setting a brightness of a screen includes following steps.

In step 201, a first brightness of ambient light in an environment where the terminal is located is acquired from a light sensor.

The ambient light in the environment where the terminal is located may be generated by a point light source, or by other light sources. The point light source may be the sun, a lighted lamp, etc.

In step 202, it is detected whether the light sensor faces away from a light source in the environment.

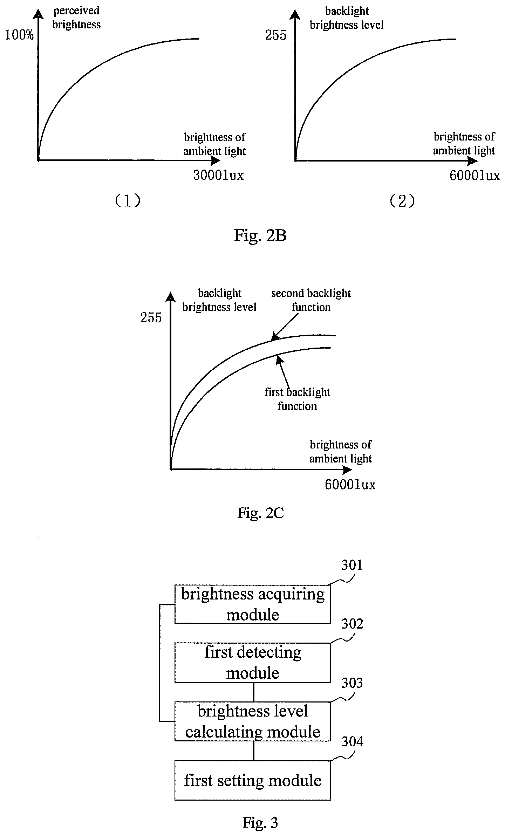

When the light sensor faces the light source, the brightness measured by the light sensor is an actual brightness of the ambient light. In this situation, the terminal may calculate a backlight brightness level according to the brightness and a first backlight function, wherein the first backlight function is a backlight function used when the light sensor faces the light source. Since a correspondence relationship between the vision of eyes and the brightness of the ambient light may be obtained by statistics, the first backlight function may be obtained with reference to the correspondence relationship. Referring to the schematic diagram of a backlight function shown in Fig. 2B, the curve in Fig. 2B(1) is used for showing the correspondence relationship between the vision of eyes and the brightness of the ambient light, and the curve in Fig. 2B(2) is used for showing a graph of the first backlight function.

When the light sensor faces away from the light source, the brightness measured by the light sensor is less than the actual brightness of the ambient light. In this situation, if the terminal calculates the backlight brightness level still according to the brightness and the first backlight function, the calculated backlight brightness is lower, such that the contrast between the ambient light and the backlight brightness of the screen is larger, thus bringing a big damage to the eyesight of a user. Therefore, before calculating the backlight brightness level according to the brightness, the terminal needs to detect whether the light sensor faces away from the light source, and then calculates the backlight brightness level according to the detection result.

Embodiments of the present disclosure provide two ways for detecting whether the light sensor faces away from the light source. In the following, the two ways will be described.

In a first way, the method for detecting whether the light sensor faces away from the light source includes following steps.
1) A measurement plane where the light sensor is located is determined.
2) It is detected whether the measurement plane faces towards a direction of the light source via a gravity sensor, in which the direction of the light source is a default direction or a direction inputted by the user.
3) It is determined that the light sensor faces towards the light source, if the measurement plane faces towards the direction of the light source.
4) It is determined that the light sensor faces away from the light source, if the measurement plane does not face towards the direction of the light source.

Before detecting whether the light sensor faces away from the light source in the environment, the measurement plane where the light sensor is located is required to be determined. The measurement plane may be the plane where the front surface of the terminal is located, or the plane where the rear surface of the terminal is located, or other planes, which is not limited in this embodiment.

Since the light sensor is fixed in a certain position of the terminal before going out of a factory, the measurement plane where the light sensor is located is a known parameter which may be obtained by the terminal directly. Generally, the light sensor is disposed on the front surface of the terminal.

After determining the measurement plane, the terminal may determine the orientation of the measurement plane of the terminal via a sensor, and then may determine the direction of the light source, and then detect whether the light sensor faces away from the light source according to the orientation of the measurement plane and the direction of the light sensor.

Firstly, the terminal may determine the orientation of the measurement plane via the sensor in many ways. In this embodiment, take the sensor being the gravity sensor as an example.

The terminal may establish a coordinate system. Assuming that the interface of the terminal is the xz plane, the center of the terminal is the origin of coordinate, the positive axis of the x-axis towards the right of the terminal, the z axis is perpendicular to the x axis on the plane of the terminal, the positive axis of the z-axis towards the upper part of the terminal in the xz plane, the y-axix is perpendicular to the plane of the terminal, the positive axis of the y-axis axle towards the upward side of the terminal outside the xz plane. In this case, the terminal may measure the acceleration of the terminal on the y-axis via the gravity sensor. If the acceleration direction is upwards, i.e. towards the positive axis of the y-axis, it is determined that the measurement plane is oriented downwards. If the acceleration direction is downwards, i.e. towards the negative axis of the y-axis, it is determined that the measurement plane is oriented upwards.

Secondly, the direction of the light source may be a default direction, such as an upward direction of the terminal, or may be a direction inputted by the user. Of course, the user may modify the default direction, which is not limited in this embodiment.

When the user inputs the direction, the terminal may provide an input box for inputting the position of the light source, or the terminal may display the options of position of the light source, such that the user may select one of the options according to the actual position of the light source, and the terminal may determine the position of the light source according the option selected by the user, thus determining the direction of the light source. For example, the terminal displays two options that "the light source is above the terminal" and "the light source is below the terminal", if the user selects the option that "the light source is above the terminal", it is determined that the direction of the light source is the upward direction of the terminal.

Generally, the light source is disposed above the terminal. When the light sensor is disposed on the front surface of the terminal, the terminal may detect whether the terminal is disposed with the front surface of the terminal facing upwardly via the gravity sensor. If the terminal is disposed with the front surface facing upwardly, it is determined that the light sensor faces towards the light source. If the terminal is disposed with the front surface facing downwards, it is determined that the light sensor faces away from the light source.

In a second way, the method for detecting whether the light sensor faces away from the light source in the environment includes following steps.
1) The second brightness of the ambient light is acquired from a preset device in the terminal, in which a plane where the preset device is located faces towards a direction opposite to a plane where the light sensor is located, and the preset device is another light sensor or a camera.
2) The first brightness acquired from the light sensor is compared with the second brightness acquired from the preset device.
3) It is determined that the light sensor faces towards the light source, if the first brightness acquired from the light sensor is greater than the second brightness acquired from the preset device.
4) It is determined that the light sensor faces away from the light source, if the first brightness acquired from the light sensor is less than the second brightness acquired from the preset device.

In a first implementation, the terminal may include the preset device with a function of acquiring the brightness of the ambient light, in which the preset device may be another light sensor or a camera. The plane where the preset device is located faces towards the direction opposite to the plane where the light sensor is located. For example, when the light sensor is disposed on the front surface of the terminal, the preset device is disposed on the rear surface of the terminal, and the preset device may be a rear camera. When the light sensor is disposed on the rear surface of the terminal, the preset device is disposed on the front surface of the terminal, and the preset device may be a front camera.

The terminal may acquire the second brightness of the ambient light from the preset device, and compare the first brightness acquired from the light sensor with the second brightness acquired from the preset device, and detect whether the light sensor faces away from the light source according to the comparison result. The order of acquiring the brightness from the light sensor and acquiring the brightness from the preset device is not limited in this embodiment.

For example, assume that the first brightness acquired from the light sensor is 400 lux. If the second brightness acquired from the preset device is 300 lux, it is determined that the light sensor faces towards the light source. If the second brightness acquired from the preset device is 500 lux, it is determined that the light sensor faces away from the light source.

In a second implementation, the terminal may measure the brightness of the ambient light twice via the light sensor, and the orientations of the measurement planes of the twice measurements are opposite. If the brightness acquired in step 201 is defined as a first brightness, the terminal may record the direction towards which the measurement plane faces when measuring the first brightness, and then the measurement plane is made to face towards an opposite direction, the terminal may measure a second brightness via the light sensor, compare the first brightness with the second brightness, and determine that the light sensor faces away from the light source if the second brightness is greater than the first brightness and that the light sensor faces towards the light source if the second brightness is less than the first brightness.

In step 203, it is detected whether the terminal is being used by the user, if it is detected that the light sensor faces away from the light source. If it is detected that the terminal is not being used by the user, step 204 is executed. If it is detected that the terminal is being used by the user, step 205 is triggered to be executed.

In an application scenario, the user locates the terminal on an object and the light sensor faces away from the light source. At this time, the user is not using the terminal. If a higher backlight brightness level is set, the power of the terminal is wasted, such that the user experience is affected. Thus, before setting the backlight brightness, the terminal needs to detect whether the terminal is being used by the user.

The way for detecting whether the terminal is being used by the user includes following steps.
1) It is detected via a distance sensor whether an object with a distance from the terminal being less than a distance threshold exists; or
2) It is detected via the screen of the terminal whether an operation triggered by the user is received.

The terminal may detect whether the terminal is being used by the user in at least one of the following two ways.

In a first way, the terminal may obtain a distance between the object and the terminal via a distance sensor and detect whether the distance is less than the distance threshold. If the distance is less than the distance threshold, it is determined that the terminal is located on the object, thus the terminal is not being used by the user. If the distance is greater than the distance threshold, it is determined that the terminal is not located on the object, thus the terminal is being used by the user. The distance sensor and the light sensor are located on a same plane.

In a second way, the terminal may detect via the screen whether an operation from the user is received. If the screen does not receive the operation from the user, it is determined that the terminal is not being used by the user. If the screen receives the operation from the user, it is determined that the terminal is being used by the user.

In step 204, a third backlight brightness level is calculated and the backlight brightness of the terminal is set to the third backlight brightness level, in which the third backlight brightness level is less than the first backlight brightness level, and the first backlight brightness level is the backlight brightness level calculated when the light sensor faces away from the light source, and the procedure is finished.

When the terminal is not being used by the user, the terminal may set the backlight brightness level to the calculated third backlight brightness level. The third backlight brightness level may be the backlight brightness level calculated according to the brightness of the ambient light, or may be a fixed level, or may be a random level less than the first backlight brightness level, which is not limited in this embodiment. The first backlight brightness level is the backlight brightness level calculated when the light sensor faces away from the light sensor.

In step 205, the first backlight brightness level is calculated according to the first brightness of the ambient light, wherein the first backlight brightness level is higher than a second backlight brightness level, and the second backlight brightness level is calculated according to the first brightness of the ambient light when the light sensor faces towards the light source.

Since the first brightness acquired from the light sensor is less than an actual brightness of the ambient light when the light sensor faces away from the light source, the terminal may calculate a second backlight function according to the first backlight function, such that the first backlight brightness level calculated according to the first brightness and the second backlight function is greater than the second backlight brightness level calculated according to the first brightness and the first backlight function. The way for calculating the second backlight function according to the first backlight function is not limited in this embodiment. Referring to the schematic diagram of the comparison of backlight functions shown in Fig. 2C, the below curve in Fig. 2C is a graph of the first backlight function, and the above curve in Fig. 2C is a graph of the second backlight function.

Alternatively, the terminal may not calculate the second backlight function, but calculate the first backlight brightness level according to the second backlight brightness level. For example, the terminal may obtain the first backlight brightness level by adding the second backlight brightness level with a preset value, or by multiplying the second backlight brightness level by a preset ratio. For example, the terminal may set the preset ratio to a value in a range of 5%-10%, which is not limited in this embodiment.

In step 206, the backlight brightness of the terminal is set to the first backlight brightness level.

To exemplify this, take setting the brightness of the screen as an example in this embodiment. Assume that the brightness of the ambient light illuminated by a fluorescent lamp is 400 lux. When the terminal is located in a forward direction, i.e. the light sensor faces towards the fluorescent lamp, the measured brightness is 400 lux, and the calculated second backlight brightness level is 100 (100 in a range of 0-255). When the terminal is located in a rear direction, i.e. the light sensor faces away from the fluorescent lamp, the measured brightness may be 370 lux. Since the graph of the second backlight function is higher than the graph of the first backlight function, the obtained first backlight brightness level is still 100, and the backlight brightness level of the backlight brightness of the terminal does not change.

In summary, with the method for setting a brightness of a screen provided by the present disclosure, the brightness of the ambient light in the environment where the terminal is located is acquired from the light sensor, and it is detected whether the light sensor faces away from the light source in the environment, and the first backlight brightness level is calculated according to the brightness of the ambient light if it is detected that the light sensor faces away from the light source, in which the first backlight brightness level is higher than the second backlight brightness level which is calculated according to the brightness of the ambient light when the light sensor faces towards the light source, and then the backlight brightness of the terminal is set to the first backlight brightness level. Since the brightness acquired by the light sensor is lower than an actual brightness of the ambient light when the light sensor faces away from the light source, the first backlight brightness level calculated when the light sensor faces away from the light source is higher than the second backlight brightness level calculated when the light sensor faces towards the light source. The problem that an inaccurate backlight brightness level is calculated according to the measured brightness of the ambient light and the backlight function which is used when the light sensor faces away from the light source because the measured brightness of the ambient light is lower when the light sensor faces away from the light source is solved, and an effect of improving the accuracy of the backlight brightness level is achieved.

In addition, by calculating the third backlight brightness level when it is detected that the terminal is not being used by the user and setting the backlight brightness of the terminal to the third backlight brightness level which is less than the first backlight brightness level, the backlight brightness is low when the user is not using the terminal, such that the problem that the power of the terminal is wasted due to a higher backlight brightness when the user is not using the terminal is solved, and the effect of saving the power of the terminal is achieved.

Fig. 3 is a block diagram showing an apparatus for setting a brightness of a screen according to an example embodiment of the present disclosure. The apparatus for setting a brightness of a screen is applied in a terminal. As shown in Fig. 3 the apparatus for setting a brightness of a screen includes a brightness acquiring module 301, a first detecting module 302, a brightness level calculating module 303 and a first setting module 304.

The brightness acquiring module 301 is configured to acquire from a light sensor a first brightness of ambient light in an environment where a terminal is located.

The first detecting module 302 is configured to detect whether the light sensor faces away from a light source in the environment.

The brightness level calculating module 303 is configured to calculate a first backlight brightness level according to the first brightness of the ambient light acquired by the brightness acquiring module 301 if the first detecting module 302 detects that light sensor faces away from the light source, in which the first backlight brightness level is higher than a second backlight brightness level, and the second backlight brightness level is calculated according to first brightness of the ambient light when the light sensor faces towards the light source.

The first setting module 304 is configured to set a backlight brightness of the terminal to the first backlight brightness level calculated by the brightness level calculating module 303.

In summary, with the apparatus for setting a brightness of a screen provided by the present disclosure, the brightness of the ambient light in the environment where the terminal is located is acquired from the light sensor, and it is detected whether the light sensor faces away from the light source in the environment, and the first backlight brightness level is calculated according to the brightness of the ambient light if it is detected that the light sensor faces away from the light source, in which the first backlight brightness level is higher than the second backlight brightness level which is calculated according to the brightness of the ambient light when the light sensor faces towards the light source, and then the backlight brightness of the terminal is set to the first backlight brightness level. Since the brightness acquired from the light sensor is lower than the actual brightness of the ambient light when the light sensor faces away from the light source, the first backlight brightness level calculated when the light sensor faces away from the light source is higher than the second backlight brightness level calculated when the light sensor faces towards the light source. The problem that an inaccurate backlight brightness level is calculated according to the measured brightness of the ambient light and the backlight function which is used when the light sensor faces away from the light source because the measured brightness of the ambient light is lower when the light sensor faces away from the light source is solved, and an effect of improving the accuracy of the backlight brightness level is achieved.

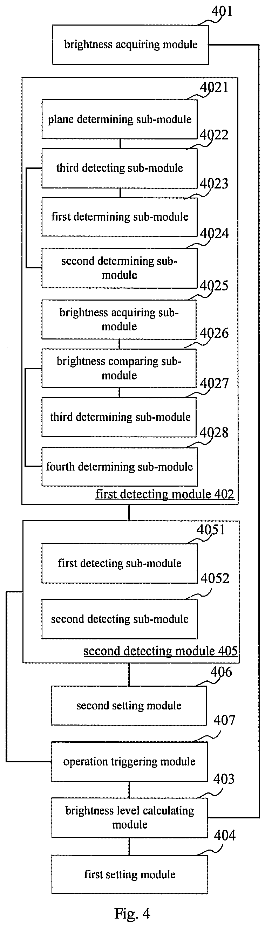

Fig. 4 is a block diagram showing an apparatus for setting a brightness of a screen according to an example embodiment of the present disclosure. The apparatus for setting a brightness of a screen is applied in a terminal. As shown in Fig. 4 the apparatus for setting a brightness of a screen includes a brightness acquiring module 401, a first detecting module 402, a brightness level calculating module 403 and a first setting module 404.

The brightness acquiring module 401 is configured to acquire from a light sensor a first brightness of ambient light in an environment where a terminal is located.

The first detecting module 402 is configured to detect whether the light sensor faces away from a light source in the environment.

The brightness level calculating module 403 is configured to calculate a first backlight brightness level according to the first brightness of the ambient light acquired by the brightness acquiring module 401 if the first detecting module 402 detects that light sensor faces away from the light source, wherein the first backlight brightness level is higher than a second backlight brightness level, and the second backlight brightness level is calculated according to first brightness of the ambient light when the light sensor faces towards the light source.

The first setting module 404 is configured to set a backlight brightness of the terminal to the first backlight brightness level calculated by the brightness level calculating module 403.

Alternatively, the apparatus provide in this embodiment further includes a second detecting module 405, a second setting module 406 and an operation triggering module 407.

The second detecting module 405 is configured to detect whether the terminal is being used by a user.

The second setting module 406 is configured to calculate a third backlight brightness level and set the backlight brightness of the terminal to the third backlight brightness level, if the second detecting module 405 detects that the terminal is not being used by the user, in which the third backlight brightness level is lower than the first backlight brightness level, and the first backlight brightness level is calculated according to the first brightness of the ambient light when the light sensor faces away from the light source.

The operation triggering module 407 is configured to trigger an operation of calculating the first backlight brightness level according to the first brightness of the ambient light if the second detecting module 405 detects that the terminal is being used by the user.

Alternatively, the second detecting module 405 includes a first detecting sub-module 4051 or a second detecting sub-module 4052.

The first detecting sub-module 4051 is configured to detect by a distance sensor whether an object with a distance from the terminal being less than a distance threshold exists.

The second detecting sub-module 4052 is configured to detect by the screen of the terminal whether an operation triggered by the user is received.

Alternatively, the first detecting module 402 includes a plane determining sub-module 4021, a third detecting sub-module 4022, a first determining sub-module 4023 and a second determining sub-module 4024.

The plane determining sub-module 4021 is configured to determine a measurement plane where the light sensor is located.

The third detecting sub-module 4022 is configured to detect via a gravity sensor whether the measurement plane determined by the plane determining module 4021 faces towards a direction of the light source, in which the direction of the light source is a default direction or a direction inputted by the user.

The first determining sub-module 4023 is configured to determine that the light sensor faces towards the light source if the measurement plane faces towards the direction of the light source.

The second determining sub-module 4024 is configured to determine that the light sensor faces away from the light source if the measurement plane does not face towards the direction of the light source.

Alternatively, the first detecting module 402 includes a brightness acquiring sub-module 4025, a brightness comparing sub-module 4026, a third determining sub-module 4027 and a fourth determining sub-module 4028.

The brightness acquiring sub-module 4025 is configured to acquire from a preset device in the terminal a second brightness of the ambient light, wherein a plane where the preset device is located faces towards a direction opposite to a plane where the light sensor is located and the preset device is another light sensor or a camera.

The brightness comparing sub-module 4026 is configured to compare the first brightness of the ambient light acquired by the light sensor with the second brightness of the ambient light acquired by the preset device.

The third determining sub-module 4027 is configured to determine that the light sensor faces towards the light source if the first brightness of the ambient light acquired from the light sensor is greater than the second brightness of the ambient light acquired from the preset device.

The fourth determining sub-module 4028 is configured to determine that the light sensor faces away from the light source if the first brightness of the ambient light acquired from the light sensor is less than the second brightness of the ambient light acquired by the preset device.

In summary, with the method for setting a brightness of a screen provided by the present disclosure, the brightness of the ambient light in the environment where the terminal is located is acquired from the light sensor, and it is detected whether the light sensor faces away from the light source in the environment, and the first backlight brightness level is calculated according to the brightness of the ambient light if it is detected that the light sensor faces away from the light source, in which the first backlight brightness level is higher than the second backlight brightness level which is calculated according to the brightness of the ambient light when the light sensor faces towards the light source, and then the backlight brightness of the terminal is set to the first backlight brightness level. Since the brightness acquired from the light sensor is lower than the actual brightness of the ambient light when the light sensor faces away from the light source, the first backlight brightness level calculated when the light sensor faces away from the light source is higher than the second backlight brightness level calculated when the light sensor faces the light source. The problem that an inaccurate backlight brightness level is calculated according to the measured brightness of the ambient light and the backlight function which is used when the light sensor faces away from the light source because the measured brightness of the ambient light is lower when the light sensor faces away from the light source is solved, and an effect of improving the accuracy of the backlight brightness level is achieved.

In addition, by calculating the third backlight brightness level when it is detected that the terminal is not being used by the user and setting the backlight brightness of the terminal to the third backlight brightness level which is less than the first backlight brightness level, the backlight brightness is low when the user is not using the terminal, such that the problem that the power of the terminal is wasted due to a higher backlight brightness when the user is not using the terminal is solved, and the effect of saving the power of the terminal is achieved.

With respect to the devices in the above embodiments, the specific manners for performing operations for individual modules therein have been described in detail in the embodiments regarding the methods for obtaining a photograph, which are not elaborated herein again.

There is provided an apparatus for setting a brightness of a screen according to an example embodiment of the present disclosure, which may implement the method for setting a brightness of a screen provided in the present disclosure. The apparatus for setting a brightness of a screen includes a processor, a memory configured to store an instruction executable by the processor.

The processor is configured to:
acquire from a light sensor a first brightness of ambient light in an environment where a terminal is located;
detect whether the light sensor faces away from a light source in the environment;
calculate a first backlight brightness level according to the first brightness of the ambient light if the light sensor faces away from the light source, in which the first backlight brightness level is higher than a second backlight brightness level, and the second backlight brightness level is calculated according to the first brightness of the ambient light when the light sensor faces towards the light source; and
set a backlight brightness of the terminal to the first backlight brightness level.

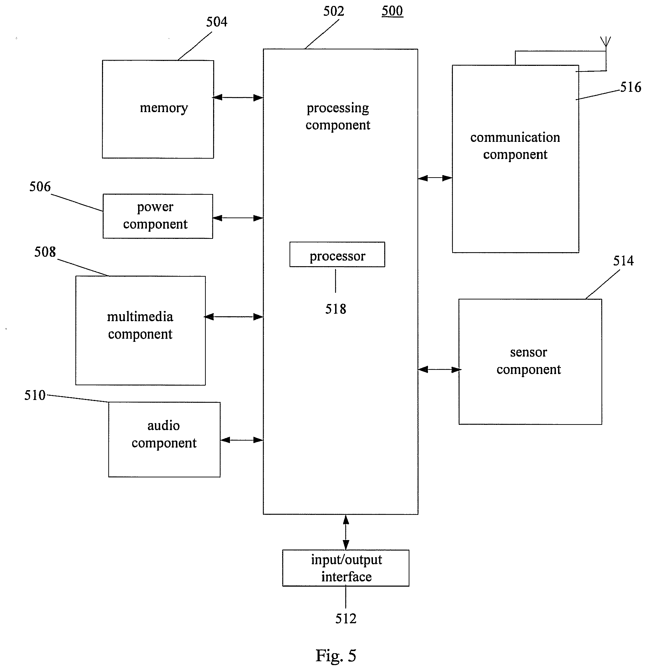

Fig. 5 is a block diagram showing a device 500 for setting a brightness of a screen according to an example embodiment of the present disclosure. For example, the device 500 may be a mobile phone, a computer, a digital broadcasting terminal, a message sending and receiving device, a game console, a flat panel device, a medical device, a fitness device, a personal digital assistant, or the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 518 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 518 in the device 500, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for setting a brightness of a screen of a terminal, comprising steps of:
acquiring (101, 201) from a light sensor of the terminal a first brightness of ambient light in an environment where the terminal is located;
detecting (102, 202) whether the light sensor faces away from a light source in the environment;
calculating (103, 205) a first backlight brightness level according to the first brightness of the ambient light if the light sensor faces away from the light source, wherein the first backlight brightness level is higher than a second backlight brightness level, and the second backlight brightness level is calculated according to the first brightness of the ambient light when the light sensor faces towards the light source; and
setting (104, 206) a backlight brightness of the screen of the terminal to the first backlight brightness level,
wherein the step of detecting (102, 202) whether the light sensor faces away from a light source comprises steps of:
determining a measurement plane where the light sensor is located;
detecting via a gravity sensor whether the measurement plane faces towards a direction of the light source, wherein the direction of the light source is a default direction or a direction inputted by the user;
determining that the light sensor faces towards the light source if the measurement plane faces towards the direction of the light source;
determining that the light sensor faces away from the light source if the measurement plane does not face towards the direction of the light source.

2. The method according to claim 1, further comprising steps of:;
detecting (203) whether the terminal is being used by a user;
calculating (204) a third backlight brightness level and setting the backlight brightness of the screen of the terminal to the third backlight brightness level, if the terminal is not being used by the user, wherein the third backlight brightness level is lower than the first backlight brightness level, and the first backlight brightness level is calculated according to the first brightness of the ambient light when the light sensor faces away from the light source; and
triggering (205) an operation of calculating the first backlight brightness level according to the first brightness of the ambient light if the terminal is being used by the user.

3. The method according to claim 2, wherein the step of detecting (203) whether the terminal is being used by a user comprises a step of:
detecting via a distance sensor whether an object with a distance from the terminal being less than a distance threshold exists; or
detecting via the screen of the terminal whether an operation triggered by the user is received.

4. The method according to any one of claims 1-3, wherein the step of detecting (102, 202) whether the light sensor faces away from the light source comprises steps of:
acquiring from a preset device in the terminal a second brightness of the ambient light, wherein a plane where the preset device is located faces towards a direction opposite to a plane where the light sensor is located, and the preset device is another light sensor or a camera;
comparing the first brightness of the ambient light acquired from the light sensor with the second brightness of the ambient light acquired from the preset device;
determining that the light sensor faces towards the light source if the first brightness of the ambient light acquired from the light sensor is greater than the second brightness of the ambient light acquired from the preset device;
determining that the light sensor faces away from the light source if the first brightness of the ambient light acquired from the light sensor is less than the second brightness of the ambient light acquired from the preset device.

5. An apparatus for setting a brightness of a screen of a terminal, comprising:
a brightness acquiring module (301, 401), configured to acquire from a light sensor of the terminal a first brightness of ambient light in an environment where the terminal is located;
a first detecting module (302, 402), configured to detect whether the light sensor faces away from a light source in the environment;
a brightness level calculating module (303, 403), configured to calculate a first backlight brightness level according to the first brightness of the ambient light acquired by the brightness acquiring module if the first detecting module detects that the light sensor faces away from the light source, wherein the first backlight brightness level is higher than a second backlight brightness level, and the second backlight brightness level is calculated according to the first brightness of the ambient light when the light sensor faces towards the light source;
a first setting module (304, 404), configured to set a backlight brightness of the screen of the terminal to the first backlight brightness level calculated by the brightness level calculating module,wherein the first detecting module (402) comprises:
a plane determining sub-module (4021), configured to determine a measurement plane where the light sensor is located;
a third detecting sub-module (4022), configured to detect via a gravity sensor whether the measurement plane determined by the plane determining module faces towards a direction of the light source, wherein the direction of the light source is a default direction or a direction inputted by the user;
a first determining sub-module (4023), configured to determine that the light sensor faces towards the light source if the measurement plane faces towards the direction of the light source; and
a second determining sub-module (4024), configured to determine that the light sensor faces away from the light source if the measurement plane does not face towards the direction of the light source.

6. The apparatus according to claim 5, further comprising:
a second detecting module (405), configured to detect whether the terminal is being used by a user;
a second setting module (406), configured to calculate a third backlight brightness level and set the backlight brightness of the screen of the terminal to the third backlight brightness level, if the second detecting module detects that the terminal is not being used by the user, wherein the third backlight brightness level is lower than the first backlight brightness level, and the first backlight brightness level is calculated according to the first brightness of the ambient light when the light sensor faces away from the light source; and
an operation triggering module (407), configured to trigger an operation of calculating the first backlight brightness level according to the first brightness of the ambient light if the second detecting module detects that the terminal is being used by the user.

7. The apparatus according to claim 6, wherein the second detecting module (405) comprises:
a first detecting sub-module (4051), configured to detect via a distance sensor whether an object with a distance from the terminal being less than a distance threshold exists; or
a second detecting sub-module (4052), configured to detect via the screen of the terminal whether an operation triggered by the user is received.

8. The apparatus according to any one of claims 5-7, wherein the first detecting module (402) comprises:
a brightness acquiring sub-module (4025), configured to acquire from a preset device in the terminal a second brightness of the ambient light, wherein a plane where the preset device is located faces towards a direction opposite to a plane where the light sensor is located and the preset device is another light sensor or a camera;
a brightness comparing sub-module (4026), configured to compare the first brightness of the ambient light acquired from the light sensor with the second brightness of the ambient light acquired from the preset device;
a third determining sub-module (4027), configured to determine that the light sensor faces towards the light source if the first brightness of the ambient light acquired from the light sensor is greater than the second brightness of the ambient light acquired from the preset device; and
a fourth determining sub-module (4028), configured to determine that the light sensor faces away from the light source if the first brightness of the ambient light acquired from the light sensor is less than the second brightness of the ambient light acquired from the preset device.

9. A non-transitory computer-readable storage medium having stored therein instructions that, when executed by a processor of a terminal, causes the terminal to perform the method for setting a brightness of a screen according to any one of claims 1-4.

## Patentansprüche

1. Verfahren zur Einstellung einer Helligkeit eines Bildschirms eines Endgeräts, umfassend die Schritte des:
Beziehens (101, 201) einer ersten Helligkeit von Umgebungslicht in einer Umgebung, in welcher das Endgerät angeordnet ist, von einem Lichtsensor des Endgeräts,
Erfassens (102, 202), ob der Lichtsensor von einer Lichtquelle in der Umgebung weg gewandt ist,
Berechnens (103, 205) eines ersten Hintergrundbeleuchtungshelligkeitsgrads gemäß der ersten Helligkeit des Umgebungslichts, wenn der Lichtsensor von der Lichtquelle weg gewandt ist, wobei der erste Hintergrundbeleuchtungshelligkeitsgrad höher als ein zweiter Hintergrundbeleuchtungshelligkeitsgrad ist, und der zweite Hintergrundbeleuchtungshelligkeitsgrad gemäß der ersten Helligkeit des Umgebungslichts berechnet wird, wenn der Lichtsensor zu der Lichtquelle hin gewandt ist, und
Einstellens (104, 206) einer Hintergrundbeleuchtungshelligkeit des Bildschirms des Endgeräts auf den ersten Hintergrundbeleuchtungshelligkeitsgrad,
wobei der Schritt des Erfassens (102, 202), ob der Lichtsensor von einer Lichtquelle weg gewandt ist, die Schritte umfasst des:
Bestimmens einer Messungsebene, auf welcher der Lichtsensor angeordnet ist,
Erfassens mittels eines Schwerkraftsensors, ob die Messungsebene zu einer Richtung der Lichtquelle hin gewandt ist, wobei die Richtung der Lichtquelle eine Standardrichtung oder eine von dem Benutzer eingegebene Richtung ist,
Bestimmens, dass der Lichtsensor zu der Lichtquelle hin gewandt ist, wenn die Messungsebene zu der Richtung der Lichtquelle hin gewandt ist,
Bestimmens, dass der Lichtsensor von der Lichtquelle weg gewandt ist, wenn die Messungsebene nicht zu der Richtung der Lichtquelle hin gewandt ist.

2. Verfahren nach Anspruch 1, ferner umfassend die Schritte des:
Erfassens (203), ob das Endgerät von einem Benutzer verwendet wird,
Berechnens (204) eines dritten Hintergrundbeleuchtungshelligkeitsgrads und Einstellens der Hintergrundbeleuchtungshelligkeit des Bildschirms des Endgeräts auf den dritten Hintergrundbeleuchtungshelligkeitsgrad, wenn das Endgerät nicht von dem Benutzer verwendet wird, wobei der dritte Hintergrundbeleuchtungshelligkeitsgrad niedriger als der erste Hintergrundbeleuchtungshelligkeitsgrad ist, und der erste Hintergrundbeleuchtungshelligkeitsgrad gemäß der ersten Helligkeit des Umgebungslichts berechnet wird, wenn der Lichtsensor von der Lichtquelle weg gewandt ist, und
Auslösens (205) eines Arbeitsvorgangs des Berechnens des ersten Hintergrundbeleuchtungshelligkeitsgrads gemäß der ersten Helligkeit des Umgebungslichts, wenn das Endgerät von dem Benutzer verwendet wird.

3. Verfahren nach Anspruch 2, wobei der Schritt des Erfassens (203), ob das Endgerät von einem Benutzer verwendet wird, einen Schritt umfasst des:
Erfassens mittels eines Abstandssensors, ob ein Objekt mit einem Abstand von dem Endgerät, der kleiner als ein Abstandsgrenzwert ist, existiert, oder
Erfassens mittels des Bildschirms des Endgeräts, ob ein von dem Benutzer ausgelöster Arbeitsvorgang empfangen wird.

4. Verfahren nach einem der Ansprüche 1-3, wobei der Schritt des Erfassens (102, 202), ob der Lichtsensor von der Lichtquelle weg gewandt ist, die Schritte umfasst des:
Beziehens einer zweiten Helligkeit des Umgebungslichts von einer voreingestellten Vorrichtung in dem Endgerät, wobei eine Ebene, auf welcher die voreingestellte Vorrichtung angeordnet ist, zu einer Richtung hin gewandt ist, die entgegengesetzt zu einer Ebene ist, auf welcher der Lichtsensor angeordnet ist, und die voreingestellte Vorrichtung ein anderer Lichtsensor oder eine Kamera ist,
Vergleichens der ersten Helligkeit des Umgebungslichts, die von dem Lichtsensor bezogen wird, mit der zweiten Helligkeit des Umgebungslichts, die von der voreingestellten Vorrichtung bezogen wird,
Bestimmens, dass der Lichtsensor zu der Lichtquelle hin gewandt ist, wenn die erste Helligkeit des Umgebungslichts, die von dem Lichtsensor bezogen wird, größer ist als die zweite Helligkeit des Umgebungslichts, die von der voreingestellten Vorrichtung bezogen wird,
Bestimmens, dass der Lichtsensor von der Lichtquelle weg gewandt ist, wenn die erste Helligkeit des Umgebungslichts, die von dem Lichtsensor bezogen wird, geringer ist als die zweite Helligkeit des Umgebungslichts, die von der voreingestellten Vorrichtung bezogen wird.

5. Gerät zur Einstellung einer Helligkeit eines Bildschirms eines Endgeräts, umfassend:
ein Helligkeitsbezugsmodul (301, 401), das dazu ausgestaltet ist, eine erste Helligkeit von Umgebungslicht in einer Umgebung, in welcher das Endgerät angeordnet ist, von einem Lichtsensor des Endgeräts zu beziehen,
ein erstes Erfassungsmodul (302, 402), das dazu ausgestaltet ist, zu erfassen, ob der Lichtsensor von einer Lichtquelle in der Umgebung weg gewandt ist,
ein Helligkeitsgrad-Berechnungsmodul (303, 403), das dazu ausgestaltet ist, einen ersten Hintergrundbeleuchtungshelligkeitsgrad gemäß der ersten Helligkeit des Umgebungslichts, die von dem Helligkeitsbezugsmodul bezogen wird, zu berechnen, wenn das erste Erfassungsmodul erfasst, dass der Lichtsensor von der Lichtquelle weg gewandt ist, wobei der erste Hintergrundbeleuchtungshelligkeitsgrad höher als ein zweiter Hintergrundbeleuchtungshelligkeitsgrad ist, und der zweite Hintergrundbeleuchtungshelligkeitsgrad gemäß der ersten Helligkeit des Umgebungslichts berechnet wird, wenn der Lichtsensor zu der Lichtquelle hin gewandt ist,
ein erstes Einstellungsmodul (304, 404), das dazu ausgestaltet ist, eine Hintergrundbeleuchtungshelligkeit des Bildschirms des Endgeräts auf den ersten Hintergrundbeleuchtungshelligkeitsgrad, der von dem Helligkeitsgrad-Berechnungsmodul berechnet wird, einzustellen, wobei das erste Erfassungsmodul (402) umfasst:
ein Ebenenbestimmungsteilmodul (4021), das dazu ausgestaltet ist, eine Messungsebene zu bestimmen, auf welcher der Lichtsensor angeordnet ist,
ein drittes Erfassungsteilmodul (4022), das dazu ausgestaltet ist, mittels eines Schwerkraftsensors zu erfassen, ob die Messungsebene, die von dem Ebenenbestimmungsteilmodul bestimmt wird, zu einer Richtung der Lichtquelle hin gewandt ist, wobei die Richtung der Lichtquelle eine Standardrichtung oder eine von dem Benutzer eingegebene Richtung ist,
ein erstes Bestimmungsteilmodul (4023), das dazu ausgestaltet ist, zu bestimmen, dass der Lichtsensor zu der Lichtquelle hin gewandt ist, wenn die Messungsebene zu der Richtung der Lichtquelle hin gewandt ist, und
ein zweites Bestimmungsteilmodul (4024), das dazu ausgestaltet ist, zu bestimmen, dass der Lichtsensor von der Lichtquelle weg gewandt ist, wenn die Messungsebene nicht zu der Richtung der Lichtquelle hin gewandt ist.

6. Gerät nach Anspruch 5, ferner umfassend:
ein zweites Erfassungsmodul (405), das dazu ausgestaltet ist, zu erfassen, ob das Endgerät von einem Benutzer verwendet wird,
ein zweites Einstellungsmodul (406), das dazu ausgestaltet ist, einen dritten Hintergrundbeleuchtungshelligkeitsgrad zu berechnen und die Hintergrundbeleuchtungshelligkeit des Bildschirms des Endgeräts auf den dritten Hintergrundbeleuchtungshelligkeitsgrad einzustellen, wenn das zweite Erfassungsmodul erfasst, dass das Endgerät nicht von dem Benutzer verwendet wird, wobei der dritte Hintergrundbeleuchtungshelligkeitsgrad niedriger als der erste Hintergrundbeleuchtungshelligkeitsgrad ist, und der erste Hintergrundbeleuchtungshelligkeitsgrad gemäß der ersten Helligkeit des Umgebungslichts berechnet wird, wenn der Lichtsensor von der Lichtquelle weg gewandt ist, und
ein Arbeitsvorgang-Auslösemodul (407), das dazu ausgestaltet ist, einen Arbeitsvorgang des Berechnens des ersten Hintergrundbeleuchtungshelligkeitsgrads gemäß der ersten Helligkeit des Umgebungslichts auszulösen, wenn das zweite Erfassungsmodul erfasst, dass das Endgerät von dem Benutzer verwendet wird.

7. Gerät nach Anspruch 6, wobei das zweite Erfassungsmodul (405) umfasst:
ein erstes Erfassungsteilmodul (4051), das dazu ausgestaltet ist, mittels eines Abstandssensors zu erfassen, ob ein Objekt mit einem Abstand von dem Endgerät, der kleiner als ein Abstandsgrenzwert ist, existiert, oder
ein zweites Erfassungsteilmodul (4052), das dazu ausgestaltet ist, mittels des Bildschirms des Endgeräts zu erfassen, ob ein von dem Benutzer ausgelöster Arbeitsvorgang empfangen wird.

8. Gerät nach einem der Ansprüche 5-7, wobei das erste Erfassungsmodul (402) umfasst:
ein Helligkeitsbezug-Teilmodul (4025), das dazu ausgestaltet ist, eine zweite Helligkeit des Umgebungslichts von einer voreingestellten Vorrichtung in dem Endgerät zu beziehen, wobei eine Ebene, auf welcher die voreingestellte Vorrichtung angeordnet ist, zu einer Richtung hin gewandt ist, die entgegengesetzt zu einer Ebene ist, auf welcher der Lichtsensor angeordnet ist, und die voreingestellte Vorrichtung ein anderer Lichtsensor oder eine Kamera ist,
ein Helligkeitsvergleich-Teilmodul (4026), das dazu ausgestaltet ist, die erste Helligkeit des Umgebungslichts, die von dem Lichtsensor bezogen wird, mit der zweiten Helligkeit des Umgebungslichts, die von der voreingestellten Vorrichtung bezogen wird, zu vergleichen,
ein drittes Bestimmungsteilmodul (4027), das dazu ausgestaltet ist, zu bestimmen, dass der Lichtsensor zu der Lichtquelle hin gewandt ist, wenn die erste Helligkeit des Umgebungslichts, die von dem Lichtsensor bezogen wird, größer ist als die zweite Helligkeit des Umgebungslichts, die von der voreingestellten Vorrichtung bezogen wird, und
ein viertes Bestimmungsteilmodul (4028), das dazu ausgestaltet ist, zu bestimmen, dass der Lichtsensor von der Lichtquelle weg gewandt ist, wenn die erste Helligkeit des Umgebungslichts, die von dem Lichtsensor bezogen wird, geringer ist als die zweite Helligkeit des Umgebungslichts, die von der voreingestellten Vorrichtung bezogen wird.

9. Nichtflüchtiges computerlesbares Speichermedium, auf dem Anweisungen gespeichert sind, die bei Ausführung durch einen Prozessor eines Endgeräts bewirken, dass das Endgerät das Verfahren zur Einstellung einer Helligkeit eines Bildschirms nach einem der Ansprüche 1-4 durchführt.

## Revendications

1. Procédé pour établir une luminosité d'un écran d'un terminal, comprenant les étapes :
d'acquisition (101, 201), à partir d'un capteur de lumière du terminal, d'une première luminosité de la lumière ambiante dans un environnement où le terminal est situé ;
de détection (102, 202) si le capteur de lumière est orienté à l'opposé d'une source de lumière dans l'environnement ;
de calcul (103, 205) d'un premier niveau de luminosité de rétroéclairage conformément à la première luminosité de la lumière ambiante si le capteur de lumière est orienté à l'opposé de la source de lumière, dans lequel le premier niveau de luminosité de rétroéclairage est plus élevé qu'un deuxième niveau de luminosité de rétroéclairage, et le deuxième niveau de luminosité de rétroéclairage est calculé conformément à la première luminosité de la lumière ambiante lorsque le capteur de lumière est orienté vers la source de lumière ; et
d'établissement (104, 206) d'une luminosité de rétroéclairage de l'écran du terminal au premier niveau de luminosité de rétroéclairage,
dans lequel l'étape de détection (102, 202) si le capteur de lumière est orienté à l'opposé d'une source de lumière comprend les étapes :
de détermination d'un plan de mesure où le capteur de lumière est situé ;
de détection, par l'intermédiaire d'un capteur de gravité, si le plan de mesure est orienté dans une direction la source de lumière, dans lequel la direction de la source de lumière est une direction par défaut ou une direction entrée par l'utilisateur ;
de détermination que le capteur de lumière est orienté vers la source de lumière si le plan de mesure est orienté dans la direction de la source de lumière ;
de détermination que le capteur de lumière est orienté à l'opposé de la source de lumière si le plan de mesure n'est pas orienté dans la direction de la source de lumière.

2. Procédé selon la revendication 1, comprenant en outre les étapes
de détection (203) si le terminal est utilisé par un utilisateur ;
de calcul (204) d'un troisième niveau de luminosité de rétroéclairage et d'établissement de la luminosité de rétroéclairage de l'écran du terminal au troisième niveau de luminosité de rétroéclairage, si le terminal n'est pas utilisé par l'utilisateur, dans lequel le troisième niveau de luminosité de rétroéclairage est plus faible que le premier niveau de luminosité de rétroéclairage, et le premier niveau de luminosité de rétroéclairage est calculé conformément à la première luminosité de la lumière ambiante lorsque le capteur de lumière est orienté à l'opposé de la source de lumière ; et
de déclenchement (205) d'une opération de calcul du premier niveau de luminosité de rétroéclairage conformément à la première luminosité de la lumière ambiante si le terminal est utilisé par l'utilisateur.

3. Procédé selon la revendication 2, dans lequel l'étape de détection (203) si le terminal est utilisé par un utilisateur comprend une étape :
de détection, par l'intermédiaire d'un capteur de distance, si un objet à une distance du terminal inférieure à un seuil de distance existe ; ou
de détection, par l'intermédiaire de l'écran du terminal, si une opération déclenchée par l'utilisateur est reçue.

4. Procédé selon l'une quelconque des revendications 1 à 3, dans lequel l'étape de détection (102, 202) si le capteur de lumière est orienté à l'opposé de la source de lumière comprend les étapes :
d'acquisition, à partir d'un dispositif prédéterminé dans le terminal, d'une deuxième luminosité de la lumière ambiante, dans lequel un plan où le dispositif prédéterminé est situé est orienté dans une direction opposée à un plan où le capteur de lumière est situé, et le dispositif prédéterminé est un autre capteur de lumière ou une caméra ;
de comparaison de la première luminosité de la lumière ambiante acquise par le capteur de lumière avec la deuxième luminosité de la lumière ambiante acquise par le dispositif prédéterminé ;
de détermination que le capteur de lumière est orienté vers la source de lumière si la première luminosité de la lumière ambiante acquise par le capteur de lumière est supérieure à la deuxième luminosité de la lumière ambiante acquise par le dispositif prédéterminé ;
de détermination que le capteur de lumière est orienté à l'opposé de la source de lumière si la première luminosité de la lumière ambiante acquise par le capteur de lumière est inférieure à la deuxième luminosité de la lumière ambiante acquise par le dispositif prédéterminé.

5. Appareil pour établir une luminosité d'un écran d'un terminal, comprenant :
un module d'acquisition de luminosité (301, 401), configuré pour acquérir, par un capteur de lumière du terminal, une première luminosité de la lumière ambiante dans un environnement où le terminal est situé ;
un premier module de détection (302, 402), configuré pour détecter si le capteur de lumière est orienté à l'opposé d'une source de lumière dans l'environnement ;
un module de calcul de niveau de luminosité (303, 403), configuré pour calculer un premier niveau de luminosité de rétroéclairage conformément à la première luminosité de la lumière ambiante acquise par le module d'acquisition de luminosité si le premier module de détection détecte que le capteur de lumière est orienté à l'opposé de la source de lumière, dans lequel le premier niveau de luminosité de rétroéclairage est plus élevé qu'un deuxième niveau de luminosité de rétroéclairage, et le deuxième niveau de luminosité de rétroéclairage est calculé conformément à la première luminosité de la lumière ambiante lorsque le capteur de lumière est orienté vers la source de lumière ;
un premier module d'établissement (304, 404), configuré pour établir une luminosité de rétroéclairage de l'écran du terminal au premier niveau de luminosité de rétroéclairage calculé par le module de calcul de niveau de luminosité, dans lequel le premier module de détection (402) comprend :
un module secondaire de détermination de plan (4021), configuré pour déterminer un plan de mesure où le capteur de lumière est situé ;
un troisième module secondaire de détection (4022), configuré pour détecter, par l'intermédiaire d'un capteur de gravité, si le plan de mesure déterminé par le module de détermination de plan est orienté dans une direction de la source de lumière, dans lequel la direction de la source de lumière est une direction par défaut ou une direction entrée par l'utilisateur ;
un premier module secondaire de détermination (4023), configuré pour déterminer que le capteur de lumière est orienté vers la source de lumière si le plan de mesure est orienté dans la direction de la source de lumière ; et
un deuxième module secondaire de détermination (4024), configuré pour déterminer que le capteur de lumière est orienté à l'opposé de la source de lumière si le plan de mesure n'est pas orienté dans la direction de la source de lumière.

6. Appareil selon la revendication 5, comprenant en outre :
un deuxième module de détection (405), configuré pour détecter si le terminal est utilisé par un utilisateur ;
un deuxième module d'établissement (406), configuré pour calculer un troisième niveau de luminosité de rétroéclairage et établir la luminosité de rétroéclairage de l'écran du terminal au troisième niveau de luminosité de rétroéclairage, si le deuxième module de détection détecte que le terminal n'est pas utilisé par l'utilisateur, dans lequel le troisième niveau de luminosité de rétroéclairage est plus faible que le premier niveau de luminosité de rétroéclairage, et le premier niveau de luminosité de rétroéclairage est calculé conformément à la première luminosité de la lumière ambiante lorsque le capteur de lumière est orienté à l'opposé de la source de lumière ; et
un module de déclenchement d'opération (407), configuré pour déclencher une opération de calcul du premier niveau de luminosité de rétroéclairage conformément à la première luminosité de la lumière ambiante si le deuxième module de détection détecte que le terminal est utilisé par l'utilisateur.

7. Appareil selon la revendication 6, dans lequel le deuxième module de détection (405) comprend :
un premier module secondaire de détection (4051), configuré pour détecter, par l'intermédiaire d'un capteur de distance, si un objet à une distance du terminal inférieure à un seuil de distance existe ; ou
un deuxième module secondaire de détection (4052), configuré pour détecter, par l'intermédiaire de l'écran du terminal, si une opération déclenchée par l'utilisateur est reçue.

8. Appareil selon l'une quelconque des revendications 5 à 7, dans lequel le premier module de détection (402) comprend :
un module secondaire d'acquisition de luminosité (4025), configuré pour acquérir, par un dispositif prédéterminé dans le terminal, une deuxième luminosité de la lumière ambiante, dans lequel un plan où le dispositif prédéterminé est situé est orienté dans une direction opposée à un plan où le capteur de lumière est situé et le dispositif prédéterminé est un autre capteur de lumière ou une caméra ;
un module secondaire de comparaison de luminosité (4026), configuré pour comparer la première luminosité de la lumière ambiante acquise par le capteur de lumière avec la deuxième luminosité de la lumière ambiante acquise par le dispositif prédéterminé ;
un troisième module secondaire de détermination (4027), configuré pour déterminer que le capteur de lumière est orienté vers la source de lumière si la première luminosité de la lumière ambiante acquise par le capteur de lumière est supérieure à la deuxième luminosité de la lumière ambiante acquise par le dispositif prédéterminé ; et
un quatrième module secondaire de détermination (4028), configuré pour déterminer que le capteur de lumière est orienté à l'opposé de la source de lumière si la première luminosité de la lumière ambiante acquise par le capteur de lumière est inférieure à la deuxième luminosité de la lumière ambiante acquise par le dispositif prédéterminé.

9. Support de mémorisation non transitoire pouvant être lu par un ordinateur sur lequel des instructions sont mémorisées qui, lorsqu'elles sont exécutées par un processeur d'un terminal, amènent le terminal à effectuer le procédé pour établir une luminosité d'un écran selon l'une quelconque des revendications 1 à 4.
